# EUROPEAN PATENT SPECIFICATION

(11) **EP 2 271 027 B1**
(45) Date of publication and mention of the grant of the patent: **23.05.2012**
(21) Application number: 09734259.6
(22) Date of filing: 22.04.2009
(51) Int. Cl.: H04L 12/24, H04L 12/437

(54) **FORCE PROTECTION SWITCHING METHOD IN ETHERNET RING NETWORK**
LEISTUNGSSCHUTZ-UMSCHALTVERFAHREN IN EINEM ETHERNET-RINGNETZWERK
PROCÉDÉ DE COMMUTATION FORCÉE DE PROTECTION DANS UN RÉSEAU ETHERNET EN BOUCLE

(30) Priority: 22.04.2008 US 46829 P; 19.12.2008 KR 20080130444; 10.04.2009 KR 20090031258
(43) Date of publication of application: 05.01.2011
(60) Divisional application: 12150046.6
(73) Proprietor: Electronics and Telecommunications Research Institute, Yuseong-gu Daejon 305-350 (KR)
(72) Inventor: KIM, Do-Yeon, Daejeon 305-762 (KR); CHEUNG, Tae-Sik, Daejeon 305-729 (KR); AHN, Byungjun, Daejeon 305-768 (KR); KIM, Bong Tae, Daejeon 305-755 (KR)
(74) Representative: Betten & Resch
(86) International application number: PCT/KR2009/002088
(87) International publication number: WO 2009/131369

(56) References cited:
- US-A1- 2001 021 177
- ITU-T Q9 - SG 15: "G.8032 Ethernet Ring Protection Overview", , March 2008 (2008-03), pages 1-23, XP002628431, Retrieved from the Internet: URL:http://www.ieee802.org/1/files/public/ docs2008/liaison-itut-g8032-overview-0308. pdf [retrieved on 2011-03-16]
- Masahiro Maruyoshi, Pedro Nunes: "Draft ITU-T Recommendation G.8032/Y.1344 Ethernet Rings Protection Switching", ITU International Telecommunication Union, no. TD 498 (PLEN/15) 22 February 2008 (2008-02-22), pages 1-35, XP002628432, Retrieved from the Internet: URL:http://www.itu.int/md/T05-SG15-080211- TD-PLEN-0498/en [retrieved on 2011-03-16]
- CHIRUVOLU G. ET AL.: 'Issues and approaches on extending Ethernet beyond LANs.' IEEE COMMUNICATIONS MAGANZINE vol. 42, no. ISS.3, 01 March 2004, pages 80 - 86, XP011108916
- LASSERRE M. ET AL.: 'Virtual Private LAN Service (VPLS) Using Label Distribution Protocol (LDP) Signaling.' NETWORKING WORKING GROUP, RFC4762 01 January 2007, XP008142962
- 'Transmission and Multiplexing (TM); Optical Access Networks (OANs) for evolving services; ATM Passive Optical Networks (PONs) and the transport of ATM over digital subscriber lines.' ETSI STANDARD TS 101 272 V1.1.1 01 June 1998, XP014015940

## Description

### TECHNICAL FIELD

The present invention relates to a forced protection switching method and a forced protection switching clearing method in an Ethernet ring network.

### BACKGROUND ART

Due to an increase in Internet users, the rate at which traffic in a communication network has increased is high. Also, Internet users have demanded various types of services, such as a high-speed data service, an electronic commerce (e-commerce) transaction service, a telemedicine service, a virtual education service, and a real-time multimedia service.

Therefore, a management scheme of coping with a communication network that is malfunctioning or performing poorly is required to provide users with continuous services and to maximize efficiency of the communication network.

Methods of improving the survivability of a management scheme are mostly classified into protection switching and restoration. Protection switching refers to a method of rapidly restoring the communication network by presetting both a path and a bandwidth between nodes when faults in the communication network occur. Restoration refers to a method of restoring interrupted services to their original states using both available paths and a volume of the communication network after the faults in the communication network occur.

In more detail, protection switching is a technique that has been applied mainly to optical transmission equipment, such as synchronous digital hierarchy (SDH)/synchronous optical network (SONET).

A conventional Ethernet protection switching technique is to block a specific port when operating normally and to unblock the specific port when a fault is detected. Thus, an operator is not able to easily block a link that is temporarily operating to repair a transmission line of a specific node in an Ethernet ring network.

Document "ITU-T Q9 - SG 15" discloses an overview of the Ethernet Ring Protection (G.8032) technique. The document introduces the G.8032 recommendation, objectives and principles. It further discloses the protection switching mechanism and R-APS messages as well as some items under study.

Draft ITU-T recommendation document G.8032/Y.1344 discloses the APS protocol and protection switching mechanisms for ETH layer Ethernet ring topologies. The protection protocol defined in the Recommendation enables protected point-to-point, point-to-multipoint and multipoint-to-multipoint connectivity within the ring or interconnected rings, called "multi-Ring/ladder network" topology.

### DETAILED DESCRIPTION OF THE INVENTION

### TECHNICAL PROBLEM

The present invention provides a forced protection switching method and a forced protection switching clearing method in an Ethernet ring network to assist an operator to easily block and clear a link corresponding to a specific node so as to provide usefulness of the Ethernet ring network.

### TECHNICAL SOLUTION

The present invention is defined in the independent claim.

The dependent claims define advantageous embodiments thereof.

According to an aspect of the present invention, there is provided a forced protection switching method applied in a node of an Ethernet ring network, including: receiving a forced switching (FS) command; blocking a port of a corresponding; forwarding a FS message indicating that the Ethernet ring network is forcedly switched; and flushing a filtering database (FDB).

According to another aspect of the present invention, there is provided a forced protection switching method applied in a node of an Ethernet ring network whose port is linked to an ring protection link (RPL) of the Ethernet ring network and is blocked, including: receiving a FS message indicating that the Ethernet ring network is forcedly switched; clearing the blocked port linked to the RPL; and flushing an FDB.

According to another aspect of the present invention, there is provided a forced protection switching method applied in a node of an Ethernet ring network, including: receiving a FS message indicating that the Ethernet ring network is forcedly switched; and flushing an FDB.

According to another aspect of the present invention, there is provided a forced protection switching clearing method applied in a node of an Ethernet ring network that has been forcedly switched, including: receiving a FS clear command; driving a timer; forwarding a clear message indicating that the node has been cleared of being forcedly switched; receiving a return message indicating that a port linked to an RPL of the Ethernet ring network has been blocked, after the timer ends; clearing the blocked port of the node; and flushing an FDB.

According to another aspect of the present invention, there is provided a forced protection switching clearing method applied in a node of an Ethernet ring network whose port is linked to an RPL of the Ethernet ring network and is cleared of being blocked, including: receiving a clear message indicating that the Ethernet ring network had been cleared of being forcedly switched; driving a timer; when the timer ends, blocking the port that is linked to the RPL; forwarding a return message indicating that the port linked to the RPL has been blocked; and flushing an FDB.

According to another aspect of the present invention, there is provided a forced protection switching clearing method applied in a node of an Ethernet ring network, including: receiving a clear message indicating that the Ethernet ring network had been cleared of being forcedly switched; receiving a return message indicating that a port linked to a RPL of the Ethernet ring network has been blocked; and flushing an FDB.

### ADVANTAGEOUS EFFECTS

According to the present invention, when an operator temporarily forcedly blocks a specific link for maintenance and repair, such as inspections of states of links, etc., in an Ethernet ring network, the operator can maintain services that are being provided so as to provide flexibility of the Ethernet ring network.

### DESCRIPTION OF THE DRAWINGS

FIG. 1 illustrates a forced protection switching method applied in an Ethernet ring network, according to an embodiment of the present invention;
FIG. 2 illustrates a forced protection switching clearing method applied in an Ethernet ring network, according to an embodiment of the present invention;
FIG. 3 is a flowchart illustrating a forced protection switching method applied in a node of an Ethernet ring network that has received a forced switching (FS) command, according to an embodiment of the present invention;
FIG. 4 is a flowchart illustrating a forced protection switching method applied in a normal node of an Ethernet ring network, according to an embodiment of the present invention;
FIG. 5 is a flowchart illustrating a forced protection switching method applied in a ring protection link (RPL) Owner of an Ethernet ring network, according to an embodiment of the present invention;
FIG. 6 is a flowchart illustrating a forced protection switching clearing method applied in a node of an Ethernet ring network that has received a FS clear command, according to an embodiment of the present invention;
FIG. 7 is a flowchart illustrating a forced protection switching clearing method applied in an RPL Owner of an Ethernet ring network, according to an embodiment of the present invention; and
FIG. 8 is a flowchart illustrating a forced protection switching clearing method applied in a normal node of an Ethernet ring network, according to an embodiment of the present invention.

### MODE OF THE INVENTION

The present invention will now be described more fully with reference to the accompanying drawings, in which exemplary embodiments of the invention are shown.

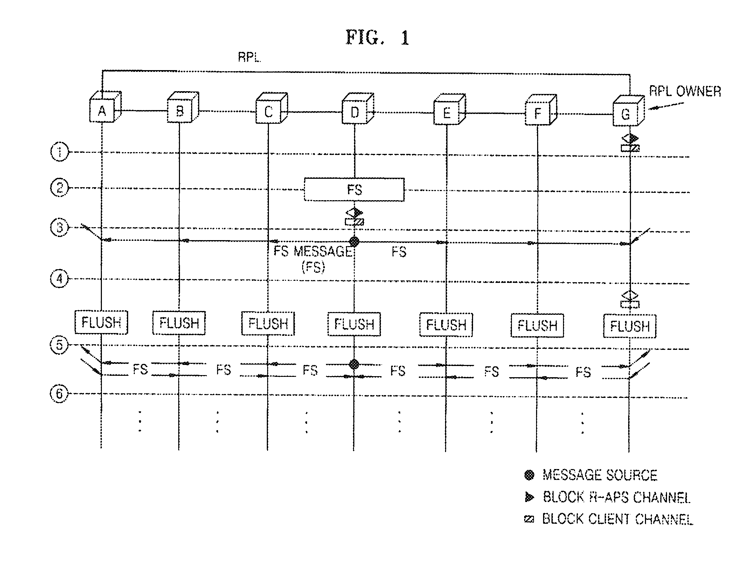

FIG. 1 illustrates a forced protection switching method applied in an Ethernet ring network, according to an embodiment of the present invention. Referring to FIG. 1, one (a link between nodes "A" and "G") from a plurality of links constituting the Ethernet ring network is set as a ring protection link (RPL), and the node "G" linked to one of two ends of the RPL is designated as an RPL Owner. The RPL Owner blocks the RPL when operating normally in order to prevent a loop from being formed.

For example, when an operator gives a forced switching (FS) command to node "D" in order to block a link between nodes "D" and "E," the node "D" blocks a port corresponding to the link between nodes "D" and "E", bidirectionally forwards a FS message periodically, and initializes, i.e., flushes, its filtering database (FDB). Here, the FDB refers to a table that includes port numbers and node identification information, i.e., a database indicating which port a received packet is forwarded to.

When a node that is not an RPL Owner receives a FS message, the node flushes its FDB. Without a higher priority demand, when the RPL Owner receives a FS message, the RPL Owner unblocks a port blocked when the RPL Owner blocked the RPL in an initial stage, and initializes its FDB.

The node "D" bidirectionally forwards the FS message periodically so that the other nodes recognize that a ring is forcedly switched. Even if the other nodes receive the FS message from the node "D," they do not re-initialize (re-flush) their FDBs after the first time the FS message is received. Service traffic resumes when the FDBs of the nodes are updated through a media access control (MAC) learning process.

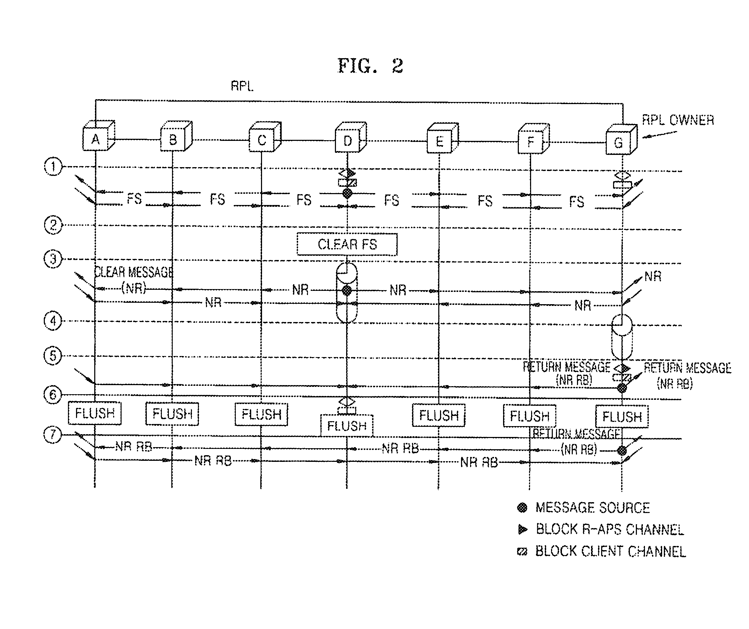

FIG. 2 illustrates a forced protection switching clearing method applied in an Ethernet ring network, according to an embodiment of the present invention. Referring to FIG. 2, an operator gives a clear command to node "D" in order to clear FS of the node "D" that is in a FS state, in which, for example, a right port of the node "D" is blocked and a blocked port of an RPL Owner is cleared.

When the node "D" receives the clear command, the node "D" drives a guard timer before flushing its FDB to prevent malfunctioning due to an unavailable FS message or return message that may be received from a neighboring node. Next, the node "D" bidirectionally forwards a clear message indicating that the clear command to clear FS has been given.

When the RPL Owner receives the clear message, the RPL Owner drives a Wait to Block (WTB) timer, and when the WTB timer expires, the RPL Owner re-blocks the port that had been unblocked and bidirectionally forwards a return message. The RPL Owner also flushes its FDB and bidirectionally forwards the return message periodically to indicate that a node of a ring is idle.

When the node "D" receives the return message, the node "D" clears the blocked right port and flushes its FDB when the guard timer expires. Even if the other nodes receive the return message, they do not re-initialize their FDBs after the first time, and service traffic resumes according to a MAC learning process.

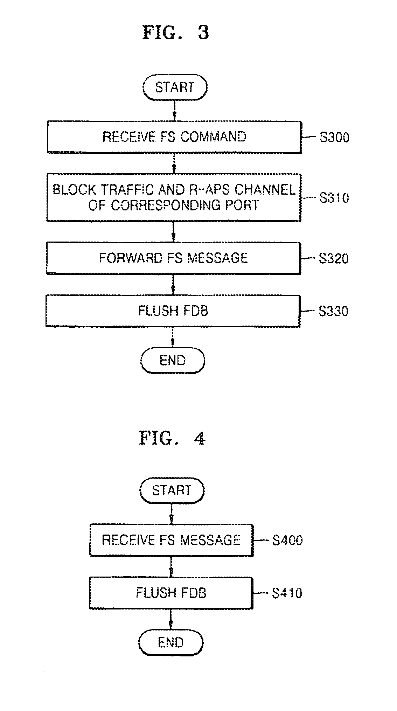

FIG. 3 is a flowchart of a forced protection switching method applied in a node of an Ethernet ring network that has received a FS command, according to an embodiment of the present invention.

Referring to FIGS. 1 and 3, an operator inputs the FS command into a specific node (the node "D" in the case of FIG. 1) that is linked to a specific link in order to temporarily block the specific link. For convenience, the specific node that has received the FS command is referred to as the node "D" with reference to FIG. 1.

In operation S300, the node "D" receives the FS command. In operation S310, the node "D" blocks a Ring-Automatic Protection Switching (R-APS) channel and traffic from the specific link that is to be blocked. In operation S320, the node "D" bidirectionally forwards a FS message that indicates FS. In this state, the node "D" continues forwarding the FS message. In operation S330, the node "D" flushes its FDB.

FIG. 4 is a flowchart illustrating a forced protection switching method applied in a normal node of an Ethernet ring network, according to an embodiment of the present invention.

Referring to FIGS. 1 and 4, in operation S400, the normal node receives a FS message indicating FS from the node "D", which has received a FS command. In operation S410, the normal node flushes its FDB. The normal node periodically receives the FS message from the node "D" but does not perform any action with respect to the FS message that the normal node receives after the first time the FS message is received.

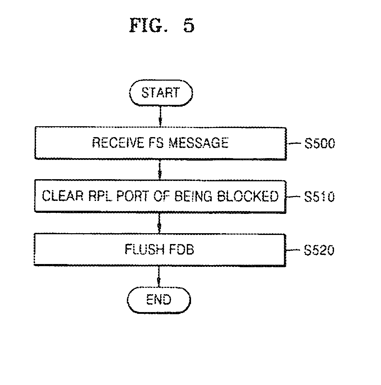

FIG. 5 is a flowchart illustrating a forced protection switching method applied in an RPL Owner of an Ethernet ring network, according to an embodiment of the present invention.

Referring to FIGS. 1 and 5, in operation S500, the RPL Owner receives a FS message indicating FS from the node "D", which has received a FS command. In operation S510, the RPL Owner clears blocking of a blocked RPL port. In operation S520, the RPL Owner flushes its FDB. The RPL Owner periodically receives the FS message but does not perform any action with respect to the FS message that the RPL Owner receives after the first time.

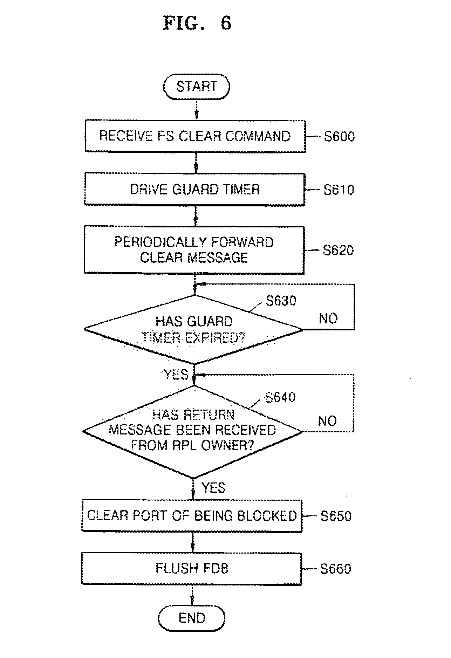

FIG. 6 is a flowchart illustrating a forced protection switching clearing method applied in a node of an Ethernet ring network that has received a FS clear command, according to an embodiment of the present invention.

Referring to FIGS. 2 and 6, in operation S600, the node "D", which has been forcedly switched by a FS command from an operator, receives a forced protection switching clear command from the operator. In operation S610, the node "D" drives a guard timer before flushing its FDB in order to prevent unavailable R-APS messages from being received. In operation S620, the node "D" forwards a clear message that indicates that forced protection switching has been cleared bidirectionally. In this state, the node "D" continues forwarding the clear message.

In operation S630, the node "D" determines whether the guard timer has expires. If the node "D" determines in operation S630 that the guard timer has expires, in operation S640, the node "D" determines whether the node "D" has received a return message that indicates that an RPL has been blocked from the RPL Owner. If the node "D" determines in operation S640 that the node "D" has received the return message, the node "D" clears a port that had been blocked by FS, in operation S650. In operation S660, the node "D" flushes its FDB.

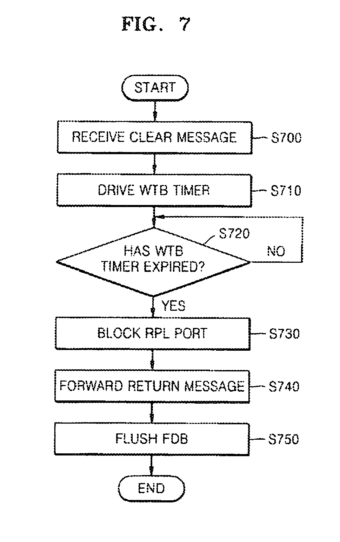

FIG. 7 is a flowchart illustrating a forced protection switching clearing method applied in an RPL Owner of an Ethernet ring network, according to an embodiment of the present invention.

Referring to FIGS. 2 and 7, in operation S700, the RPL Owner receives a clear message from the node "D." In operation S710, the RPL Owner drives a WTB timer. In operation S720, the RPL Owner determines whether the WTB timer has expired. If the RPL Owner determines in operation S720 that the WTB timer has expired, the RPL Owner blocks a RPL port in operation S730. In operation S740, the RPL Owner bidirectionally forwards a return message indicating that the RPL port has been re-blocked. In operation S750, the RPL Owner flushes its FDB.

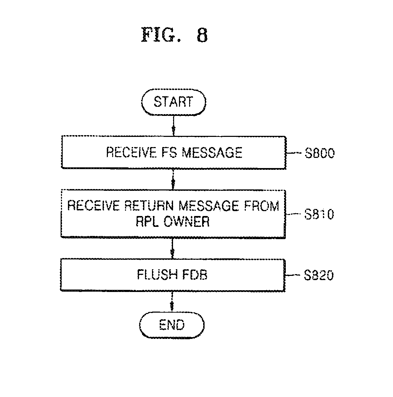

FIG. 8 is a flowchart illustrating a forced protection switching clearing method applied in a normal node of an Ethernet ring network according to an embodiment of the present invention.

Referring to FIGS. 2 and 8, in operation S800, the normal node receives a clear message from the node "D", which has received a FS clear command. In operation S810, the normal node receives a return message that indicates that the Ethernet ring network has been re-blocked, i.e., has returned to its initial state from the RPL Owner. In operation S820, the normal node flushes its FDB. The normal node does not perform any action with respect to the return message that the normal node receives after the first time the message is received.

The invention can also be embodied as computer readable codes on a computer readable recording medium. The computer readable recording medium is any data storage device that can store data that can be thereafter read by a computer system. Examples of the computer readable recording medium include read-only memory (ROM), random-access memory (RAM), CD-ROMs, magnetic tapes, floppy disks, and optical data storage devices. The computer readable recording medium can also be distributed over network coupled computer systems so that the computer readable code is stored and executed in a distributed fashion.

While this invention has been particularly shown and described with reference to preferred embodiments thereof, it will be understood by those skilled in the art that various changes in form and details may be made therein without departing from the invention as defined by the appended claims. The preferred embodiments should be considered in descriptive sense only and not for purposes of limitation. Therefore, the scope of the invention is defined not by the detailed description of the invention but by the appended claims, and all differences within the scope will be construed as being included in the present invention.

## Claims

1. A forced protection switching method applied in a node (D) of an Ethernet ring network, comprising:
receiving a forced switching command from an operator;
blocking a port of a link as indicated in said forced switching command;
forwarding bidirectionally in said Ethernet ring network, a forced switching message indicating that the Ethernet ring network is forcedly switched; and
flushing a filtering database of said node,
wherein the blocking of the port comprises blocking traffic and an Ring-Automatic Protection Switching, R-APS, channel for a port corresponding to a blocked one of two links that are linked to the node.

2. The forced protection switching method of claim 1, wherein the forwarding of the forced switching message comprises forwarding the forced switching message period ically.

3. The forced protection switching method of claim 1, wherein when a node that is not an Ring Protection Link, RPL, owner receiving the forced protection message flush their filtering databases and without a higher priority demand a RPL Owner receiving the forced protection switching message unblocks RPL blocked port when the RPL owner blocked the RPL in an initial stage and initializes its filtering database, FDB.

4. A forced protection switching clearing method applied in a node (D) of an Ethernet ring network that has been forcedly switched by a force switch command, comprising:
receiving a force switch clear command from an operator;
driving a timer;
forwarding bidirectionally in said Ethernet ring network, a clear message indicating that the node has been cleared of being forcedly switched,
and after the expiration of the timer further comprising the steps of:
receiving a return message indicating that a port linked to an Ring Protection Link, RPL, of the Ethernet ring network has been blocked;
clearing a blocked port of the node; and
flushing a filtering database of said node.

5. The forced protection switching clearing method of claim 3, wherein the receiving of the return message comprises receiving the return message periodically, and clearing of the blocked port and flushing of the filtering database are performed only when the return message is received for the first time.

6. A computer program comprising program code which when executed on a computer causes the computer to carry out a method according to one of claims 1 to 5 for forced protection switching or forced protection switching clearing.

## Patentansprüche

1. Zwangsschutzschaltverfahren, das in einem Knoten (D) eines Ethernet-Ringnetzwerks angewendet wird, umfassend:
Empfangen eines Zwangsschaltbefehls von einem Bediener;
Blockieren eines Ports einer Verbindung, wie es in dem Zwangsschaltbefehl angezeigt ist;
bidirektionales Weiterleiten einer Zwangsschaltnachricht, die anzeigt, dass das Ethernet-Ringnetzwerk zwangsgeschaltet wird, im Ethernet-Ringnetzwerk; und
Leeren einer Filterdatenbank des Knotens,
wobei das Blockieren des Ports einen Blockierverkehr und einen Kanal für automatisches Schutzschalten im Ring, R-APS (= Ring-Automatic Protection Switching), für ein Port entsprechend einem blockierten von zwei Verbindungen, die mit dem Knoten verbunden sind, aufweist.

2. Zwangsschutzschaltverfahren nach Anspruch 1, wobei das Weiterleiten der Zwangsschutzschaltnachricht ein periodisches Weiterleiten der Zwangsschaltnachricht umfasst.

3. Zwangsschutzschaltverfahren nach Anspruch 1, wobei, wenn ein Knoten, der kein Besitzer einer Ringschutzverbindung, RPL (= Ring Protection Link), ist, ein Empfangen der Zwangsschutznachricht Filterdatenbanken leert und, ohne höhere Prioritätsanforderung, ein RPL-Besitzer, der die Zwangsschutzschaltnachricht empfängt, ein RPL-blockiertes Port entblockt, wenn der RPL-Besitzer den RPL in einer Anfangsstufe blockierte und seine Filterdatenbank, FDB, initialisiert.

4. Zwangsschutzschalt-Löschverfahren, das in einem Knoten (D) eines Ethernet-Ringnetzwerks angewendet wird, das durch einen Zwangsschaltbefehl zwangsgeschaltet wird, umfassend:
Empfangen eines Zwangsschalt-Löschbefehls von einem Bediener;
Betreiben eines Zeitgebers;
bidirektionales Weiterleiten einer Löschnachricht, die anzeigt, dass der Knoten diesbezüglich gelöscht worden ist, dass er zwangsgeschaltet wird, im Ethernet-Ringnetzwerk;
und nach dem Ablauf des Zeitgebers weiterhin die folgenden Schritte umfassend:
Empfangen einer Antwortnachricht, die anzeigt, dass ein Port, das mit einer Ringschutzverbindung, RPL, des Ethernet-Ringnetzwerks verbunden ist, blockiert worden ist;
Löschen eines blockierten Ports des Knotens; und
Leeren einer Filterdatenbank des Knotens.

5. Zwangsschutzschalt-Löschverfahren nach Anspruch 4, wobei das Empfangen der Antwortnachricht ein periodisches Empfangen der Antwortnachricht umfasst und das Löschen des blockierten Ports und das Leeren der Filterdatenbank nur durchgeführt werden, wenn die Antwortnachricht das erste Mal empfangen wird.

6. Computerprogramm, das einen Programmcode umfasst, der dann, wenn er auf einem Computer ausgeführt wird, veranlasst, dass der Computer ein Verfahren nach einem der Ansprüche 1 bis 5 zum Zwangsschutzschalten oder zum Löschen des Zwangsschutzschaltens ausführt.

## Revendications

1. Procédé de commutation de protection forcée appliqué dans un noeud (D) d'un réseau en anneau Ethernet, comprenant :
la réception d'une commande de commutation forcée depuis un opérateur ;
le blocage d'un port d'une liaison comme indiqué dans ladite commande de commutation forcée ;
la retransmission de façon bidirectionnelle dans ledit réseau en anneau Ethernet d'un message de commutation forcée indiquant que le réseau en anneau Ethernet est commuté de force ; et
la purge d'une base de données de filtrage dudit noeud,
dans lequel le blocage du port comprend le blocage du trafic et d'un canal de commutation automatique de protection d'anneau, R-APS, pour un port correspondant à une liaison bloquée de deux liaisons qui sont liées au noeud.

2. Procédé de commutation de protection forcée selon la revendication 1, dans lequel la retransmission du message de commutation forcée comprend la retransmission périodique du message de commutation forcée.

3. Procédé de commutation de protection forcée selon la revendication 1, dans lequel lorsqu'un noeud qui n'est pas un propriétaire de liaison de protection d'anneau, RPL, recevant le message de protection forcée purge ses bases de données de filtrage et, sans demande de priorité plus élevée, un propriétaire RPL recevant le message de commutation de protection forcée débloque le port bloqué RPL lorsque le propriétaire RPL a bloqué le RPL dans un état initial et initialise sa base de données de filtrage, FDB.

4. Procédé d'annulation de commutation de protection forcée appliqué dans un noeud (D) d'un réseau en anneau Ethernet qui a été commuté de force par une commande de commutation de force, comprenant :
la réception d'une commande d'annulation de commutation forcée depuis un opérateur ;
le déclenchement d'un temporisateur ;
la retransmission de façon bidirectionnelle dans ledit réseau en anneau Ethernet d'un message d'annulation indiquant que la commutation forcée dans le noeud a été annulée,
et après expiration du temporisateur, le procédé comprend en outre les étapes :
de réception d'un message de retour indiquant qu'un port lié à une liaison de protection d'anneau, RPL, du réseau en anneau Ethernet a été bloqué ;
d'annulation d'un port bloqué du noeud ; et
de purge d'une base de données de filtrage dudit noeud.

5. Procédé d'annulation de commutation de protection forcée selon la revendication 3, dans lequel la réception du message de retour comprend la réception périodique du message de retour et l'annulation du port bloqué et la purge de la base de données de filtrage sont réalisées seulement lorsque le message de retour est reçu pour la première fois.

6. Programme informatique comprenant un code de programme qui lorsqu'il est exécuté sur un ordinateur amène l'ordinateur à réaliser un procédé selon l'une des revendications 1 à 5 pour une commutation de protection forcée ou une annulation de commutation de protection forcée.
